# EUROPÄISCHE PATENTSCHRIFT

(11) **EP 2 230 213 B1**
(45) Veröffentlichungstag und Bekanntmachung des Hinweises auf die Patenterteilung: **22.08.2012**
(21) Anmeldenummer: 10450042.6
(22) Anmeldetag: 17.03.2010
(51) Int. Cl.: C02F 3/06, C02F 103/42

(54) **Vorrichtung zur Reinigung von Wasser aus Schwimmbecken oder Teichen**
Device for cleaning water from swimming pools or ponds
Dispositif de nettoyage d'eau provenant d'une piscine ou d'un étang

(30) Priorität: 20.03.2009 AT 4462009
(43) Veröffentlichungstag der Anmeldung: 22.09.2010
(73) Patentinhaber: Hackner, Heinz, 3300 Amstetten (AT)
(72) Erfinder: Hackner, Heinz, 3300 Amstetten (AT)
(74) Vertreter: Hübscher, Helmut

(56) Entgegenhaltungen:
- WO-A1-98/21153
- DE-U1- 9 016 178
- US-A- 5 833 857

## Beschreibung

Die Erfindung betrifft eine Vorrichtung zur Reinigung von Wasser aus Schwimmbecken oder Teichen mit einem Biofilter, der von zu reinigendem Wasser durchströmbar ist und der ein in einem Filterbehälter angeordnetes Filterbett umfasst, wobei der Filterbehälter einen das Filterbett aufnehmenden nach oben offenen und gegebenenfalls mit einem Deckel versschließbaren Transportbehälter bildet, der bodenseitig einen Zulauf für zu reinigendes Wasser und im Bereich der Behälteroberseite einen Ablauf für gefiltertes Wasser aufweist.

Derzeit werden vermehrt Gartenteiche bzw. Schwimmbecken mit biologischer Wasseraufbereitung gebaut, die als Schwimm- oder Badteiche benutzt werden können. Dazu werden Rand- bzw. Uferbereiche solcher Teiche üblicherweise bepflanzt und dienen diese Bereiche als Regenerationszonen für das Wasser. Derartige künstliche Gewässer wie Schwimmbecken, Schwimmteiche oder künstliche Feuchtbiotope werden üblicherweise immer vor Ort aufgebaut, was bedeutet, dass Aushübe, Betonwände oder Erdwälle mit einer Folie ausgekleidet werden müssen. Bei solchen Anlagen ist ein permanenter Eintrag von Pflanzenbestandteilen und tierischen Bestandteilen, wie insbesondere Insekten oder dgl. unvermeidbar. Diese Verschmutzungen treten innerhalb kürzester auf und zersetzen sich, was zu einer Überdüngung des Teiches führt. Wird dieser Teich als Schwimm- oder Badeteich benutzt, werden diese Verlandungsstoffe im Badebereich aufgewirbelt, was in der Folge ein trübes, mit Schwebstoffen und Algen belastetes Wasser zur Folge hat.

Eine derartige Vorrichtung ist beispielsweise aus der US 5 833 857 A bekannt. Des Weiteren wurde bereits vorgeschlagen (DE 90 161 78 U1), eine Teichanlage in einen Primär- und einen Sekundärteich aufzuteilen, wobei der Primärteich als Schwimmteich dient und der Sekundärteich zur Reinigung bzw. Regeneration des Wassers. Beispielsweise weist der Primärteich eine ufernahe bepflanzte Regenerationszone und einen mittigen pflanzenfreien Schwimmteich auf. Dabei können getrennte Teiche oder aber ein Teich vorgesehen sein, der durch bauliche Elemente, wie Betonwände, Erdwälle oder dgl., in den Primär- und den Sekundärteich aufgeteilt ist.

Eine weitere derartige Vorrichtung ist aus der DE 103 31 746 B4 bekannt, die einen Schwimmteich offenbart, der durch eine Trennwand in einen Primärteich, einen Schwimmteich und in einen Sekundärteich, den Filter unterteilt. Der Sekundärteich wird von einem Filterbehälter gebildet, in dem das natürliche Filtermaterial und Gewässerpflanzen angeordnet sind, die vom zu reinigenden Wasser durchströmt werden. Dieser Reinigungsbereich ist mit wenigstens einer Schicht aus einem partikelförmigen Filtermaterial versehen und mit einer Fördereinrichtung ausgestattet, welche das zu reinigende Wasser durch den Sekundärteich pumpt. Ein wesentlicher Nachteil der bekannten Anordnungen der Filterzonen liegt darin, dass diese auf der Baustelle einen erhöhten Mehraufwand und eine Verlängerung der Bauzeit verursachen. Es muss stets ein gesondertes Becken, eben das Sekundärbecken gebaut werden, welches auf der Baustelle vor Ort mit mehreren Filterschichten aufwändig befüllt und gegebenenfalls bepflanzt werden muss. Diese einzelnen Filterelemente sind für einen Laien ohne entsprechendes Fachwissen nur schwer einzubauen. Weiters ist die übliche Abdichtung der einzelnen Teiche gegeneinander mit einer Folie, für den Fall, dass die Teiche nicht 100%ig auf ein Niveau gebaut werden aufwändig und ist ein Eintrag von Oberflächenwasser und somit ein zusätzlicher Eintrag von Nährstoffen in den Teich gegeben, wodurch es zu einem gesteigerten Algenwachstum und letztendlich zum Kippen des Gewässers kommen kann. Kippen die bekannten Filteranlagen zudem in Folge Überdüngung oder dgl., müssen diese zudem meist arbeitsintensiv abgetragen, und neu aufgebaut werden.

Ausgehend von einem Stand der Technik der vorgeschilderten Art liegt der Erfindung die Aufgabe zugrunde eine Vorrichtung zur Reinigung von Wasser aus Schwimmbecken oder Teichen mit einem Biofilter zu schaffen, die einerseits einen raschen Aufbau der Filteranlage an einer Baustelle gestattet und der nicht in aufwändiger Weise abgedichtet werden muss.

Die Erfindung löst diese Aufgabe dadurch, dass der Transportbehälter Behälteruntenseitig mit der Transportbehälterobenseite zusammenwirkende gegeneinander vorragende Führungsflächen ausbildet, welche aufeinander gestapelte Transportbehälter gegen seitlichen Versatz sichern, und dass der Behälterboden als Transportpalettenboden ausgebildet ist, also insbesondere Einschubführungen für Staplergabeln oder Anschlagpunkte für Hubeinrichtungen aufweist.

Dadurch dass der Filterbehälter einen das Filterbett aufnehmenden nach oben offenen Transportbehälter bildet, kann der Filterbehälter werksseitig anschlussfertig vorgefertigt werden und muss der erfindungsgemäße Transportbehälter lediglich an einer Baustelle in den Teich bzw. in einen gesonderten Schacht eingesetzt oder aber an beliebiger Stelle im Nahbereich des Teichs aufgestellt werden. Der Transportbehälter, der das Filterbett aufnimmt, muss lediglich über geeignete Anschlüsse an den Zulauf für das zu reinigende Wasser und für an den Ablauf für das gefilterte Wasser angeschlossen werden. Stellt sich heraus, dass die benötigte Filterleistung nach einem entsprechenden Betrieb der Filteranlage nicht mehr gewährleistet ist, kann der Transportbehälter in einfacher Weise aufgenommen werden und gegen einen Neuen ausgetauscht werden bzw. kann der Transportbehälter werksseitig wieder aufbereitet und neu befüllt werden. Aufwändige Teichumbauarbeiten können somit entfallen. Durch die einheitliche rasche und saubere Befüllung des Biofiltermoduls im Produktionswerk mit den Substraten kann ein kontinuierlicher und homogener Aufbau erfolgen, der stets eine ordnungsgemäße Filterwirkung sicherstellt. Üblicherweise besteht das Filterelement aus mehreren Schichten von Kies, insbesondere Rundkies, Filtergranulat, beispielsweise Zeolith, und Pflanzengranulat in unterschiedlichsten Körnungen. Darüber hinaus kann der Filterbehälter nach oben mit einem Deckel verschließbar sein bzw. mit einer Bepflanzung ausgestattet sein. Ein Bauherr kann diese Biofiltermodule in einfacher Weise selbst aufbauen, ohne auf höhere Kenntnisse beim Teichbau zurückgreifen zu müssen. Die nach außen aus dem Filterbehälter führenden Anschlüsse können behälterboden- oder oberseitig vorgesehen sein, um den Filterbehälter in verschiedensten Einbaulagen vorteilhaft an einen Kreislauf anschließen zu können. Dazu kann beispielsweise eine vom bodenseitigen Zulauf behälterinnenseitig zur Behälteroberseite führende Anschlussleitung vorgesehen sein.

Um für eine ordnungsgemäße Durchströmung des Filterbehälters sorgen zu können, empfiehlt es sich, wenn dem Transportbehälter bodenseitig ein an den Zulauf für zu reinigendes Wasser angeschlossener Verteiler, vorzugsweise eine Verteilerspinne, mit über den Transportbehälterboden verteilt angeordneten Eintrittsöffnungen für das zu reinigende Wasser zugehört. Das zu reinigende Wasser wird somit über die Eintrittsöffnung an den Verteiler abgegeben, der das zu reinigende Wasser vorzugsweise gleichmäßig verteilt über den Transportbehälterboden abgibt. Im einfachsten Fall kann dieser Verteiler ein Rohr- bzw. Schlauchsystem sein, der gleichmäßig verteilt auf der Transportbehälteroberfläche angeordnet ist und mit der entsprechenden Austrittsöffnung versehen ist. Gegebenenfalls kann das Rohr- oder Schlauchende wiederum aus dem Filterbehälter abgeleitet und mit einem gesonderten Verschluss ausgestattet sein. Wird dieser Verschluss geöffnet, so kann der Verteiler gegebenenfalls durch Spülen von Algen oder Pflanzenresten gereinigt werden. Eine besonders einfache und vorteilhafte Verteilung über den Transportbehälterboden ergibt sich allerdings, wenn die Verteilerspinnen einen zentraler Verteilerast und davon und davon quer abragende Eintragsäste umfasst. Derartige Verteilerspinnen bzw. Verteilerkreuze sind beispielsweise aus PVC-Rohren aufgebaut, die mit radialen Schlitzen für den Wasseraustritt ausgestattet sind. Diese Verteilerspinnen sind äußerst robust und können problemlos in das Filtersubstrat eingebettet werden.

Um ein Verstopfen der Austrittsöffnungen der Verteiler durch Algen oder dgl. zu vermeiden empfiehlt es sich dem Zulauf für das zu reinigende Wasser einen Grobfilter, vorzugsweise ein Filtersieb, vor- oder zuzuordnen. Wird das zu reinigende Wasser vor seiner Zuleitung zum Biofilter über ein in ein gesondertes Gehäuse eingesetztes Filtersieb geleitet, kann ein Verstopfen der Eintrittsöffnungen der Verteiler in einfacher Weise vermieden werden. Man braucht lediglich das Filtersieb in regelmäßigen Abständen von Verunreinigungen zu befreien.

Ein weiterer Vorteil der Erfindung liegt darin, dass der Biofilter wenigstens zwei in Serie oder parallel geschaltete Filterbehälter umfassen kann. Damit kann das Modular aufgebaute Filtersystem in einfacher Weise an unterschiedlichste Teichgrößen bzw. Filterleistungen angepasst werden.

Dadurch, dass der Transportbehälter behälterunterseitig mit der Transportbehälteroberseite zusammenwirkende gegeneinander vorragende Führungsflächen ausbildet, welche aufeinander gestapelte Transportbehälter gegen seitlichen Versatz sichern, ist gewährleistet, dass die erfindungsgemäßen Transportbehälter problemlos zwischengelagert und gegebenenfalls gestapelt transportiert werden können. Eben zu diesem Zweck weist jede Transportoberseite eine Aufnahme für die Transportbehälterunterseite eines anderen Transportbehälters auf. Ist der Behälterboden zudem als Transportpalettenboden ausgebildet, weist der Transportbehälterboden also insbesondere Einschubführungen für Staplergabeln oder Anschlagpunkte für Hubeinrichtungen auf, so ist ein rasches und unkompliziertes Versetzen der Transportbehälter an der Baustelle ebenso möglich, wie ein umkompliziertes Hantieren damit im Produktionswerk, bei der Befüllung oder beim Transport.

Gehört dem Transportbehälter bodenseitig ein verschließbarer Abfluss zu, so kann der Filterbehälter, insbesondere bei gegebenenfalls bei verstopftem Verteiler oder dgl., rasch und in einfacher Weise von Wasser befreit werden, um das Transportgewicht des Filterbehälters zu verringern. Weiters kann der Transportbehälter mit einer an den Zulauf angeschlossenen Saugpumpe, bzw. der hinsichtlich ihrer Förderrichtung umkehrbaren Förderpumpe, entleert werden.

Ein wesentlicher Vorteil dieser modulartigen Bauweise liegt darin, dass der Transportbehälter neben einem Filtereinsatz wenigstens eine Förderpumpe aufnehmen kann. Es können somit gesonderte Transportbehälter mit Filter und Förderpumpe vorgesehen sein, an welche weitere, lediglich als Filter ausgebildete Transportbehälter parallel oder in Serie angeschlossen werden können. Damit kann gegebenenfalls eine zyklische einfache Wartung der gesamten, für die Funktion einer Teichanlage erforderlichen Anlage werksseitig vorgenommen werden. Der erfindungsgemäße, vorzugsweise mit Wasserpflanzen ausgestattete Transportbehälter kann mit gleicher Wasserstandshöhe in das Gewässer eingesetzt oder daneben angeordnet sein. Der Bauherr ist daher bezüglich der Anordnung der Filterlage nicht besonders gebunden, wobei durch die erfindungsgemäßen Transportbehälter zudem für keine gesonderte Abdichtung der Biofilteranlagen gesorgt werden muss.

In der Zeichnung ist die Erfindung anhand eines Ausführungsbeispiels schematisch dargestellt. Es zeigen
- Fig. 1: einen unbefüllten erfindungsgemäßen Transportbehälter in Draufsicht,
- Fig. 2: einen befüllten Transportbehälter aus Fig. 1 im Querschnitt und
- Fig. 3: ein Schwimmbecken mit einer erfindungsgemäßen Vorrichtung zum Reinigen von Teichwasser.

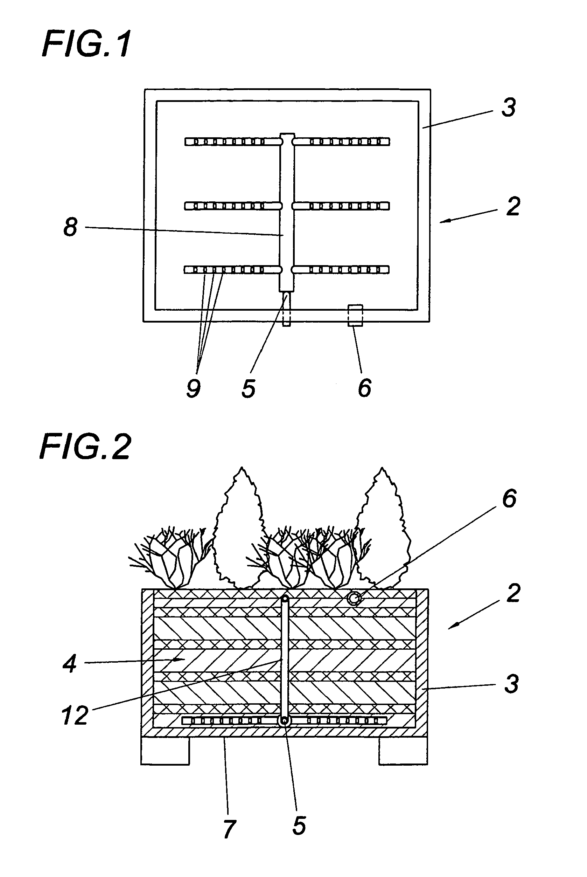

Die erfindungsgemäße Vorrichtung zur Reinigung von Wasser aus Schwimmbecken 1 oder Teichen umfasst einen Biofilter 2, der von zu reinigendem Wasser durchströmt wird und der ein in einem Filterbehälter 3 angeordnetes Filterbett 4 umfasst. Die Schichten des Filters bestehen aus unterschiedlichsten Kiesschichten (beispielsweise mit einer Körnung von 16/32 bzw. 4/8) und Zeolithen mit einer Körnung von rund 0,1 bis 2,5 mm. Zudem ist das Filterbett behälterobenseitig bepflanzt. Der Filterbehälter 3 bildet einen das Filterbett 4 aufnehmenden, nach oben offenen und gegebenenfalls mit einem Deckel verschließbaren Transportbehälter aus, der bodenseitig einen Zulauf 5 für zu reinigendes Wasser und im Bereich der Behälteroberseite einen Ablauf 6 für gefiltertes Wasser aufweist. Der Zulauf 5 mündet sowohl behälterbodenseitig als auch über ein Anschlussrohr 12 an der Behälteroberseite aus dem Transportbehälter, wobei der bodenseitige Anschluss bzw. das Anschlussrohr 12 und der Ablauf 6 vorzugsweise in üblicher Weise mit entsprechenden Kupplungen ausgestattet sind. Der jeweils nicht benötigte dem Zulauf zugeordnete Anschluss kann mit entsprechenden Mitteln, wie Stopfen, Ventilen od. dgl. verschlossen werden. Der Behälterboden 7 ist als Transportpalettenboden ausgebildet, weist also insbesondere Einschubführungen für Staplergabeln auf (siehe insbesondere Fig. 2).
Dem Transportbehälter gehört bodenseitig ein an den Zulauf 5 für zu reinigendes Wasser angeschlossener Verteiler 8, im dargestellten Ausführungsbeispiel eine Verteilerspinne, mit über den Transportbehälterboden verteilt angeordneten Eintrittsöffnungen 9 für zu reinigendes Wasser zu. Diese Verteilerspinne umfasst einen zentralen Verteilerast, von dem quer davon Eintragsäste abragen, welche die Eintrittsöffnungen aufweisen.

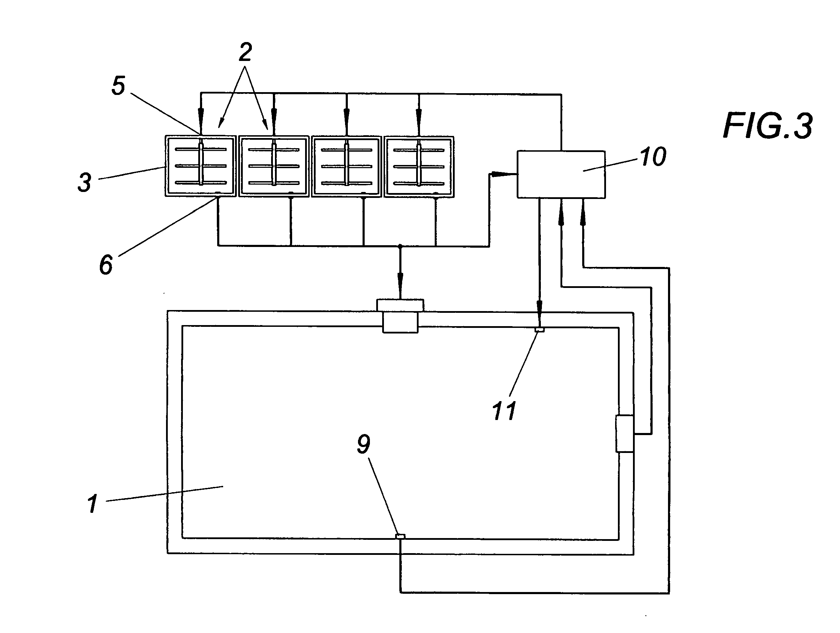

Fig. 3 zeigt ein Schwimmbecken mit Absaugungen 9 bzw. einem Skimmerbecken, von wo zu reinigendes Wasser über eine Fördereinrichtung 10, in der vorzugsweise ein nicht näher dargestelltes Grobfilter für das zu reinigende Wasser vorgesehen ist, zu vier parallel geschalteten Filterbehältern geleitet wird. Das gefilterte Wasser wird über die Abläufe 6 entweder direkt in das Schwimmbecken eingetragen, oder über die Eintragsdüsen 11 in das Schwimmbecken eingebracht. Ist ein Deckel zum Verschließen des Transportbehälters vorgesehen, so ist es möglich den Filter ohne Wasserpflanzen zu betreiben. Die in den Biofiltermodulen enthaltene Biologie kann dabei insbesondere dann vorteilhaft erhalten werden, wenn das Wasser in den Modulen gegebenenfalls zusätzlich beheizt wird.

Die Ansaugung des zu reinigenden Wassers erfolgt im Schwimmbereich, wobei das zu reinigende Wasser über einen Durchflusszähler zu den Biofiltermodulen geleitet wird. Die Verteiler sorgen dabei für eine gleichmäßige Durchströmung der Filterbehälter. Derartige Filterbehälter können beispielsweise mit einer Größe von rund 1 x 1 Meter und einer Höhe von einem halben Meter bis 1 Meter ausgebildet sein. Das gereinigte Wasser gelangt üblicherweise in ein Vorflutbecken, das als Sammelbecken für das in den einzelnen Filtermodul anfallende gereinigte Wasser dient, von wo das gereinigte Wasser in den Schwimmbereich weitergeleitet oder wieder in den Filterbereich rückgeführt werden kann.

## Patentansprüche

1. Vorrichtung zur Reinigung von Wasser aus Schwimmbecken (1) oder Teichen mit einem Biofilter (2), der von zu reinigendem Wasser durchströmbar ist und der ein in einem Filterbehälter (3) angeordnetes Filterbett (4) umfasst, wobei der Filterbehälter (3) einen das Filterbett (4) aufnehmenden nach oben offenen und gegebenenfalls mit einem Deckel versschließbaren Transportbehälter bildet, der bodenseitig einen Zulauf (5) für zu reinigendes Wasser und im Bereich der Behälteroberseite einen Ablauf (6) für gefiltertes Wasser aufweist **dadurch gekennzeichnet, dass** der Transportbehälter behälteruntenseitig mit der Transportbehälterobenseite zusammenwirkende gegeneinander vorragende Führungsflächen ausbildet, welche aufeinander gestapelte Transportbehälter gegen seitlichen Versatz sichern, und dass der Behälterboden (7) als Transportpalettenboden ausgebildet ist, also insbesondere Einschubführungen für Staplergabeln oder Anschlagpunkte für Hubeinrichtungen aufweist.

2. Vorrichtung nach Anspruch 1, **dadurch gekennzeichnet, dass** dem Transportbehälter bodenseitig ein an den Zulauf (5) für zu reinigendes Wasser angeschlossener Verteiler (8), vorzugsweise eine Verteilerspinne, mit über den Transportbehälterboden verteilt angeordneten Eintrittsöffnungen (9) für das zu reinigende Wasser zugehört.

3. Vorrichtung nach Anspruch 2, **dadurch gekennzeichnet, dass** die Verteilerspinne einen zentralen Verteilerast und davon quer abragende Eintragsäste umfasst.

4. Vorrichtung nach einem der Ansprüche 1 bis 3, **dadurch gekennzeichnet, dass** dem Zulauf (5) für zu reinigendes Wasser ein Grobfilter, vorzugsweise ein Filtersieb, vor oder zugeordnet ist.

5. Vorrichtung nach einem der Ansprüche 1 bis 4, **dadurch gekennzeichnet, dass** der Biofilter (2) wenigstens zwei in Serie oder parallel geschaltete Filterbehälter (3) umfasst.

6. Vorrichtung nach einem der Ansprüche 1 bis 5, **dadurch gekennzeichnet, dass** dem Transportbehälter bodenseitig ein verschließbarer Abfluss zugehört.

7. Vorrichtung nach einem der Ansprüche 1 bis 6, **dadurch gekennzeichnet, dass** der Transportbehälter neben einem Filtereinsatz wenigstens eine Förderpumpe aufnimmt.

8. Vorrichtung nach einem der Ansprüche 1 bis 7, **dadurch gekennzeichnet, dass** der vorzugsweise mit Wasserpflanzen ausgestattete Transportbehälter mit gleicher Wasserstandshöhe oder erhöht in ein Gewässer eingesetzt oder daneben angeordnet ist.

## Claims

1. Device for cleaning water from swimming pools (i) or ponds, having a biofilter (2), through which water to be cleaned can flow and which comprises a filter bed (4) which is disposed in a filter container (3), wherein the filter container (3) forms a transport container which receives the filter bed (4), is open at the top, optionally can be closed by a cover, comprises on the base side an inlet (5) for water to be cleaned and comprises in the region of the top side of the container an outlet (6) for filtered water, **characterised in that** the transport container forms on the underside of the container guide surfaces which protrude against one another, cooperate with the top side of the transport container and prevent transport containers, which are stacked one on top of the other, from becoming laterally offset, and that the container base (7) is formed as a transport pallet base, i.e., comprises in particular insert guides for forklift truck forks or stop points for lifting devices.

2. Device as claimed in claim 1, **characterised in that** a distributor (8), preferably a distributor spider, which is connected to the inlet (5) for water to be cleaned and has inlet openings (9) - disposed so as to be distributed over the transport container base - for the water to be cleaned appertains to the transport container on the base side.

3. Device as claimed in claim 2, **characterised in that** the distributor spider comprises a central distribution limb and feed limbs protruding transversely therefrom.

4. Device as claimed in any one of claims 1 to 3, **characterised in that** a coarse filter, preferably a filter screen, is disposed upstream of or is allocated to the inlet (5) for water to be cleaned.

5. Device as claimed in any one of claims 1 to 4, **characterised in that** the biofilter (2) comprises at least two filter containers (3) which are connected in series or in parallel.

6. Device as claimed in any one of claims I to 5, **characterised in that** a closable outflow appertains to the transport container on the base side.

7. Device as claimed in any one of claims 1 to 6, **characterised in that** the transport container accommodates at least one delivery pump as well as a filter insert.

8. Device as claimed in any one of claims 1 to 7, **characterised in that** the transport container which is provided preferably with water plants is inserted into, or arranged next to, a body of water at the same water level height or higher.

## Revendications

1. Dispositif de purification de l'eau des piscines (1) ou des étangs avec un biofiltre (2) qui est traversé par l'eau à purifier et qui contient des couches filtrantes (4) disposées dans un conteneur à filtre (3), le conteneur à filtre (3) constituant un conteneur de transport contenant les couches filtrantes (4) et éventuellement fermé par un couvercle, comportant du côté de son fond une arrivée (5) d'eau à purifier et dans la zone de la partie supérieure du conteneur une sortie (6) d'eau filtrée, **caractérisé en ce que** le conteneur de transport forme, côté inférieur du conteneur, des surfaces de guidage en saillie interagissant avec le côté supérieur du conteneur de transport, lesquelles assurent des conteneurs de transport empilés les uns sur les autres contre un déplacement latéral, et que le fond (7) du conteneur est constitué comme le fond d'une palette de transport, donc présente en particulier des guides d'insertion pour des fourches ou des points de levage pour des engins de levage.

2. Dispositif selon la revendication 1, **caractérisé en ce qu'**un distributeur (8), de préférence une araignée de distribution, relié à l'arrivée (5) d'eau à purifier fait partie du conteneur de transport, côté du fond, avec des orifices d'entrée (9) pour l'eau à purifier disposés répartis sur le fond du conteneur de transport.

3. Dispositif selon la revendication 2, **caractérisé en ce que** l'araignée de distribution comprend une branche de distribution centrale et des branches d'entrée transversales à celle-ci.

4. Dispositif selon l'une quelconque revendications 1 à 3, **caractérisé en ce qu'**un filtre grossier, de préférence un tamis filtre, est disposé en amont de l'entrée (5) pour l'eau à purifier ou lui est associé.

5. Dispositif selon l'une quelconque des revendications 1 à 4, **caractérisé en ce que** le biofiltre (2) comprend au moins deux conteneurs de filtre disposés en série ou en parallèle.

6. Dispositif selon l'une quelconque des revendications 1 à 5, **caractérisé en ce qu'**un écoulement verrouillable fait partie du conteneur de transport côté fond.

7. Dispositif selon l'une quelconque des revendications 1 à 6, **caractérisé en ce que** le conteneur de transport contient au moins une pompe d'alimentation à côté d'une cartouche filtrante.

8. Dispositif selon l'une quelconque des revendications 1 à 7, **caractérisé en ce que** le conteneur de transport, muni par exemple de plantes aquatiques, avec la même hauteur du niveau d'eau ou avec une hauteur élevée du niveau d'eau, est placé dans un plan d'eau ou est situé à proximité de celui-ci
